# EUROPEAN PATENT SPECIFICATION

(11) **EP 3 862 855 B1**
(45) Date of publication and mention of the grant of the patent: **10.06.2026**
(21) Application number: 20189517.4
(22) Date of filing: 05.08.2020
(51) Int. Cl.: G06F 3/041, G06F 3/0488, G06F 1/16

(54) **METHOD AND DEVICE FOR CONTROLLING A TOUCH SCREEN, TERMINAL AND STORAGE MEDIUM**
VERFAHREN UND VORRICHTUNG ZUR STEUERUNG EINES BERÜHRUNGSBILDSCHIRMS, ENDGERÄT UND SPEICHERMEDIUM
PROCÉDÉ ET DISPOSITIF DE COMMANDE D'UN ÉCRAN TACTILE, TERMINAL ET SUPPORT D'INFORMATIONS

(30) Priority: 10.02.2020 CN 202010084852
(43) Date of publication of application: 11.08.2021
(73) Proprietor: Beijing Xiaomi Mobile Software Co., Ltd., Beijing 100085 (CN)
(72) Inventor: PENG, Cong, Beijing, 100085 (CN); GAO, Wenjun, Beijing, 100085 (CN)
(74) Representative: Gevers Patents

(56) References cited:
- EP-A1- 3 483 706
- EP-A1- 3 483 714

## Description

### TECHNICAL FIELD

The present disclosure relates to the technical field of display touch but not limited to the technical field of wireless communications, and more particularly, to a method and device for controlling a touch screen, a terminal and a storage medium.

### BACKGROUND

With development of display touch technologies, large-screen handheld devices, full-screen handheld devices or curved handheld devices have been designed for mobile phones, tablet computers or wearable devices. A touch screen can be an integrated body of a display screen and a touch panel. In such a manner, large-screen touch, full-screen touch or curved-screen touch can be realized. However, in some scenes, misoperation is likely to occur at edge regions of a screen when a user is holding a device, resulting a high misoperation rate.

Related technology is known from EP3483714A1.

### SUMMARY

Then invention is set out in the appended set of claims.

A terminal network selection method provided by the embodiments of the disclosure may determine an application scene of a touch screen, and determine whether to shield an edge region with a high accidental-touch rate according to the application scene, so that large-screen, full-screen or curved screen touch can be realized under the application scene where whole-screen touch is needed, and accidental-touch prevention regions which easily have a high accidental-touch rate can be automatically shielded under the application scene where accidental touch needs to be lowered. Therefore, the accidental-touch rate of the touch screen is reduced, and the touch detection accuracy of the touch screen is improved.

It is to be understood that the above general descriptions and the following detailed descriptions are exemplary and explanatory only, and are not intended to limit the disclosure.

### BRIEF DESCRIPTION OF THE DRAWINGS

The accompanying drawings, which are incorporated in and constitute a part of this specification, illustrate embodiments consistent with the disclosure and together with the specification serve to explain the principles of the disclosure.
FIG. 1 is a flowchart showing a method for controlling a touch screen according to an exemplary embodiment.
FIG. 2 is a flowchart showing a method for controlling a touch screen according to an exemplary embodiment.
FIG. 3 is a flowchart showing a method for controlling a touch screen according to an exemplary embodiment.
FIG. 4A is a schematic diagram illustrating a touch screen according to an exemplary embodiment.
FIG. 4B is a schematic diagram illustrating a touch region under a full-screen application scene according to an exemplary embodiment.
FIG. 4C is a schematic diagram illustrating accidental-touch prevention regions under an application scene in a portrait mode according to an exemplary embodiment.
FIG. 4D is a schematic diagram illustrating accidental-touch prevention regions under an application scene in a landscape mode according to an exemplary embodiment.
FIG. 5 is a block diagram illustrating a device for controlling a touch screen according to an exemplary embodiment.
FIG. 6 is a block diagram illustrating a terminal according to an exemplary embodiment not being part of the present invention.
FIG. 7 is a block diagram illustrating a server according to an exemplary embodiment not being part of the present invention.

### DETAILED DESCRIPTION

Exemplary embodiments will be described in detail herein, examples of which are illustrated in the accompanying drawings. When the following description refers to the accompanying drawings, the same numbers in different drawings represent the same or similar elements unless otherwise indicated. The implementations described in the following exemplary embodiments do not represent all implementations consistent with the disclosure. They are merely examples of devices and methods consistent with some aspects of the disclosure as detailed in the appended claims.

Terms used in the present disclosure are only adopted for the purpose of describing specific embodiments but not intended to limit the present disclosure. "A/an" and "the" in a singular form in the present disclosure and the appended claims are also intended to include a plural form, unless other meanings are clearly denoted throughout the present disclosure. It is also to be understood that term "and/or" used in the present disclosure refers to and includes one or any or all possible combinations of multiple associated items that are listed.

It is to be understood that "first", "second" and similar terms used in the specification and claims of the present application are not to represent any sequence, number or importance but only to distinguish different parts. Likewise, similar terms such as "one" or "a/an" also do not represent a number limit but represent "at least one". Unless otherwise pointed out, terms like "front", "rear", "lower" and/or "upper" are only for convenient description but not limited to a position or a spatial orientation. Terms like "include" or "contain" refer to that an element or object appearing before "include" or "contain" covers an element or object and equivalent thereof listed after "include" or "contain" and does not exclude another element or object. Similar terms such as "connect" or "interconnect" are not limited to physical or mechanical connection, and may include electrical connection, either direct or indirect.

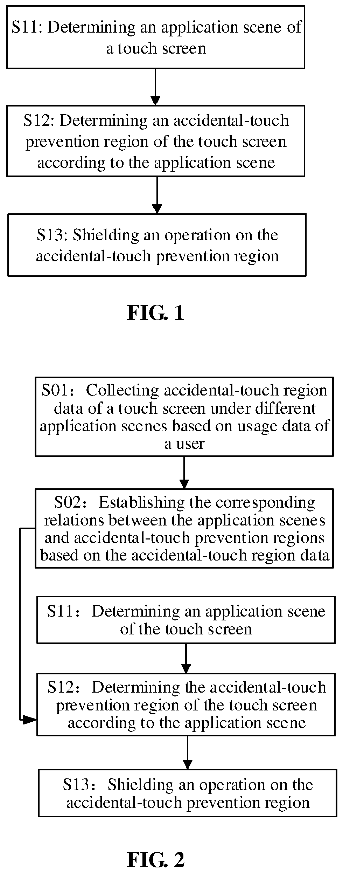

As shown in FIG. 1, the embodiment provides a method for controlling a touch screen, applied to a terminal with a touch screen. The method includes:
S11: an application scene of the touch screen is determined;
S12: an accidental-touch prevention region of the touch screen is determined according to the application scene; and
S13: an operation on the accidental-touch prevention region is shielded.

In an embodiment of the present disclosure, the touch screen of the terminal may be a full screen or a curved screen.

In other embodiments, the application scene of the touch screen may be determined according to a foreground application of the terminal in the use of the terminal. When the application runs in background, a running state of the application may not be changed even if the touch screen is accidentally touched. Therefore, the application scene is determined according to the foreground application in the embodiments of the present disclosure. In other embodiments, the application scene of the touch screen may be determined according to activated hardware in the terminal in the use of the terminal. For example, a positioning chip of the terminal may determine that the touch screen is in a positioning scene. For another example, when a data volume transmitted by an antenna of the terminal is larger than a volume threshold, it may be determined that the touch screen is in a communication scene.

Shielded regions in the touch screen are the shielded accidental-touch prevention regions. Even if the touch screen is touched, the touch screen cannot detect any touch point and/or does not report any touch point.

Under different application scenes, the requirements on the use of the touch screen are different. Accordingly, whether to shield all or part of edge regions of the touch screen may be determined according to application scenes. Therefore, no region of the touch screen may be shielded under an application scene where the whole touch screen needs to be used, and all or part of the edge regions of the touch screen may be shielded under an application scene where accidental touch needs to be reduced.

In some embodiments, the touch screen may include a center region and edge regions at a periphery of the center region.

According to the method provided by the present embodiment, a user can have better experience in the user of a large touch screen, a full touch screen or a curved touch screen under some application scenes. Under some application scenes, accidental touch can be reduced and touch accuracy can be improved by shielding part or all of edge regions of the touch screen.

In some examples, S11 may include: determining application scenes of the touch screen according to use states of the touch screen. The use states of the touch screen include, but not limited to, display modes and/or display content of the touch screen.

Thus, in some embodiments, S11 may include: determining application scenes according to display modes of the touch screen of the terminal; or/and, determining application scenes according to types of the display content of the touch screen of the terminal.

The display modes are related to the posture of the touch screen. The display modes may include: a landscape display mode for a landscape screen posture and a portrait display mode for a portrait screen posture.

The display content is related to applications, for example, game applications, reading applications and/or multimedia information applications. The multimedia information applications may include: audio applications, video applications and applications supporting both audio playing and video playing.

In some examples, application scenes may be determined according to the use states of the terminal. The use states may include, but not limited to, a use state determined by an application in an on state or an application in an activated state in the terminal. An application may be in an active activated state or in an inactive dormant state after being turned on. Various application functions can be executed when the application is in the activated state. While, a plurality of functions cannot be realized when the application is in the dormant state, and the power consumption therein is low.

In some cases, application scenes may include: a daily application scene and a non-daily application scene. Generally, the daily application scene can be one or more application scenes with higher use frequencies; and the non-daily application scene can be any application scene other than the daily application scene.

In some examples, the daily application scenes may include: common social scenes, shopping scenes, information browsing scenes and/or searching scenes. Under the daily application scenes, the edge regions of the touch screen are not shielded. Under the non-daily application scene, the edge regions of the touch screen are shielded.

In some embodiments, S12 may include: determining the accidental-touch prevention region of the touch screen under the application scene based on preset corresponding relations between application scenes and accidental-touch prevention regions.

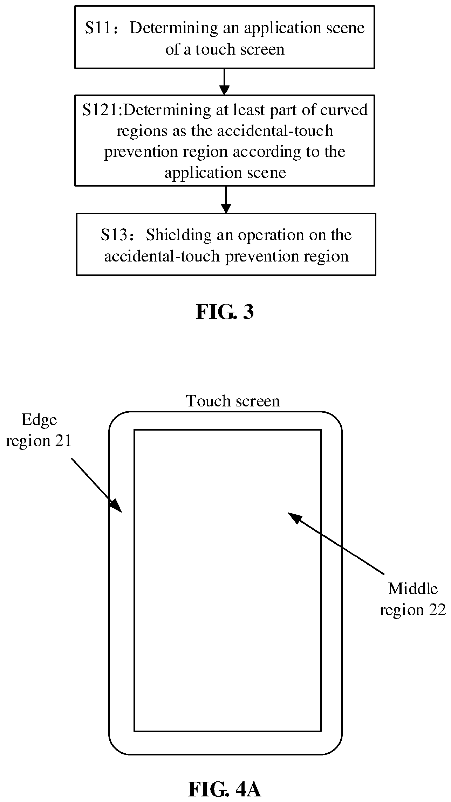

The accidental-touch prevention regions may be the edge regions as described above, and may further include a middle region other than the edge regions. The edge regions may be edge regions with a distance from a terminal border less than a predetermined value. Since held regions of the edge regions are regions where accidental touch is likely to occur frequently, the edge regions may be set as the accidental-touch prevention regions. An edge region 21 and a middle region 22 are exemplarily shown in FIG. 4A.

In some embodiments, as shown in FIG. 2, the method further includes:
S01: accidental-touch region data of a touch screen under different application scenes are collected based on usage data of a user; and
S02: the corresponding relations between the application scenes and the accidental-touch prevention regions are established according to the accidental-touch region data. The usage data of the user may include, but not limited to, data about the use of the touch screen.

The accidental-touch region data may include: indication data of a region affected by an accidental-touch operation.

Meanwhile, an application scene when an accidental-touch operation is generated may be further recorded, so that corresponding relations may be established subsequently for the accidental-touch prevention regions.

Usage data generated when a user uses the terminal is collected, and after a large amount of data are statistically analyzed and processed, accidental-touch region data under the different application scenes is collected. According to the accidental-touch prevention data, touch regions with a higher accidental-touch probability than a threshold or with a maximum accidental-touch probability under the different application scenes are analyzed, and the touch regions are set as accidental-touch prevention regions under the corresponding application scenes.

The accidental-touch prevention data may be analyzed through a deep learning model or a machine learning model or the like. Corresponding relations between the different application scenes and the accidental-touch prevention regions are established.

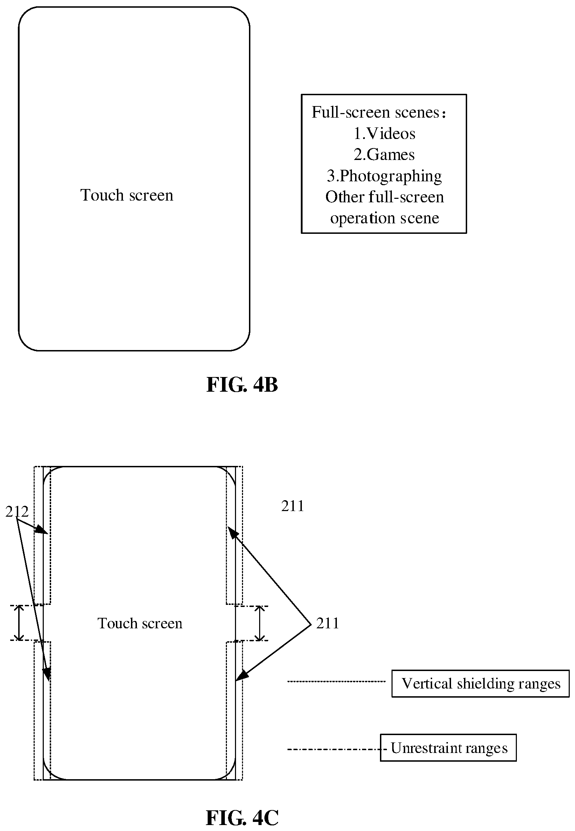

Referring to FIG. 4B, under full-screen application scenes like videos, games or photographing, no region of a touch screen is shielded.

Referring to FIG. 4C, accidental-touch prevention regions corresponding to an application scene in a portrait mode may be edge regions 211 and edge regions 212 as shown in FIG. 4C. Further, the edge regions 211 and the edge regions 212 may be edge regions of long sides of a touch screen.

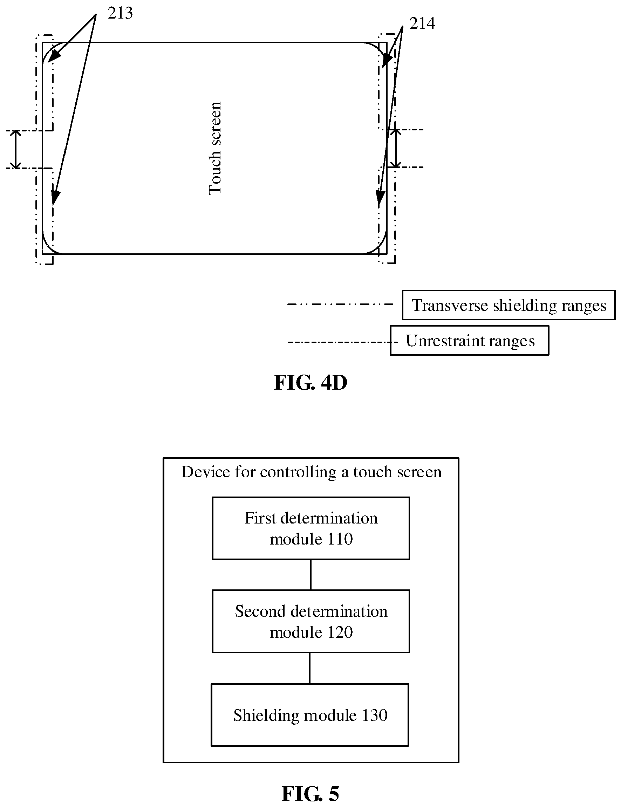

Referring to FIG. 4D, accidental-touch prevention regions corresponding to an application scene in a landscape mode may be edge regions 213 and edge regions 214 as shown in FIG. 4D. Further, the edge regions 213 and the edge regions 214 may be edge regions of short sides of a touch screen.

In the embodiments of the present disclosure, touch data of the touch screen under the different application scenes may be collected in advance. After a touch operation is detected and the terminal responds to the touch operation, a confirmation feedback from a user to the response is not detected. Instead, a negative feedback about exiting a page jump caused by the touch operation is detected; or, a negative feedback such as a closing operation responding to the touch operation is detected. At this moment, it may be determined that an accidental-touch operation is detected. Data in a region where the accidental-touch operation occurs and other data may be a type of the accidental-touch operation data as mentioned above.

The terminal may record the touch positions of the accidental-touch operation and the corresponding application scenes. Under subsequent corresponding application scenes, shapes and/or sizes of the regions needing to be prevented against accidental touch may be determined according to the collected touch positions of the accidental-touch operation.

In some embodiments, there is no certain sequential order between S01 and S11. In some embodiments, S01 to S11 may be executed after a terminal is started.

In some embodiments, in the early stage when a terminal is put into use, accidental-touch prevention regions needing to be shielded under different application scenes may be predetermined by executing S01 and S02.

In some examples, the method may further include:
when application scenes are full-screen scenes, it is determined that a touch screen is not shielded, wherein the full-screen scenes include: video playing scenes, game scenes or photographing scenes.

In the examples of the present disclosure, the application scenes may include full-screen scenes and non-full-screen scenes. Under the full-screen scenes, no region of the touch screen may be shielded. The full-screen scenes may include, but not limited to, video playing scenes, game scenes or photographing scenes.

The video playing scenes may include application scenes where a terminal plays videos.

The game scenes may include scenes where the terminal turns on game applications.

The photographing scenes may include scenes of collecting a single image or scenes of video recording.

In some examples, the method may include: when the application scenes are not the full-screen scenes, it is determined that the accidental-touch prevention regions are shielded. The accidental-touch prevention regions may include, but not limited to, part of edge regions of the touch screen.

Further, S12 may include:
according to a display mode of the touch screen, the shielded accidental-touch prevention regions are determined as at least part of edge regions of long sides or at least part of edge regions of short sides of the touch screen.

Firstly, under the condition that the application scenes are not the full-screen scenes, it may be determined that part of the edge regions of the touch screen need to be shielded. In some examples, under the condition that the application scenes are not the full-screen scenes, it may be determined that all of the edge regions of the touch screen need to be shielded.

In the examples of the present disclosure, specific edge regions needing to be shielded may be determined according to the display modes of the touch screen.

Exemplarily, S12 may include: when the display mode of the touch screen is a landscape mode, shielded accidental-touch prevention regions may be determined as edge regions of short sides of the touch screen.

Further, referring to FIG. 4D, the accidental-touch prevention regions in the landscape mode may be part of edge regions of short sides of the touch screen, the edge regions of the short sides in FIG. 4D further include part of unrestraint ranges. The unrestraint ranges here are non-shielded regions, please see the middle parts of the edge regions of the short sides in FIG. 4D.

In specific examples, a display mode of a posture of a touch screen may be obtained by monitoring the posture of a terminal through a gravitational acceleration sensor and the like of the terminal.

In a horizontal screen posture and a landscape mode, the short sides of the touch screen may be regions held by a user. In order to reduce accidental touch, part or all of the edge regions of the short sides of the touch screen may be the accidental-touch prevention regions in the embodiments of the present disclosure.

In some examples, determining to shield at least part of the edge regions of the long sides or at least part of the edge regions of the short sides of the touch screen according to the display modes of the touch screen may include:

when the display mode of the touch screen is a portrait mode, it is determined that at least part of the edge regions of the long sides of the touch screen are shielded.

Under the condition that the touch screen is in the portrait mode, the edge regions of the long sides of the touch screen may be the regions where a user holds the terminal. In such a case, it may be determined that part or all of the edge regions of the long sides of the touch screen are shielded, so that accidental touch can be reduced. Further, referring to FIG. 4C, the edge regions of the long sides of the touch screen may further include unrestraint regions at the middle position. The unrestraint regions are regions other than the accidental-touch prevention regions. That is, the unrestraint ranges are touch regions that do not need to be shielded.

In some examples, S 13 may include:
regions other than center sub-regions of long-side left-edge regions and sub-regions other than the center sub-regions of long-side right-edge regions are shielded;
   or,
regions other than the center sub-regions of short-side upper-edge regions and sub-regions other than the center sub-regions of short-side lower-edge regions are shielded.

Exemplarily, as shown in FIG. 4B, full-screen scenes include video playing scenes, game scenes and photographing scenes. No region of the touch screen is shielded under the full-screen scenes to implement full-screen operations.

In the portrait mode, vertical shielding ranges in FIG. 4C are shielded. In the landscape mode, the shielded accidental-touch prevention regions are 211 and 212 representing the vertical shielding ranges in FIG. 4C. The unrestraint ranges in FIG. 4C are schematic center sub-regions of the edge regions.

In the landscape mode, transverse shielding ranges in FIG. 4D are shielded, and in the landscape mode, the shielded accidental-touch prevention regions are 213 and 214 representing the transverse shielding ranges in FIG. 4D. The unrestraint ranges in FIG. 4D are schematic center sub-regions of the edge regions.

The non-full-screen scenes here can be any scenes other than the full-screen scenes.

In some embodiments, as shown in FIG. 3, the touch screen includes: a plane region and curved regions at edges of the plane region.

S12 may include S121. S121 may include:
at least part of the curved regions are determined as the accidental-touch prevention region according to the application scene.

In the examples of the present disclosure, the plane region may be the center region of the touch screen. The curved regions may be edge regions of the touch screen. In some examples, the touch screen may include two curved regions symmetrically distributed with respect to a center point of the touch screen, or may include four curved regions symmetrically distributed with respect to the center point of the touch screen.

In some examples, the touch screen may further include one or three curved regions distributed at the edges of the plane region. For example, one curved region may be one edge region of the touch screen.

The method for controlling a touch screen in the embodiments of the present disclosure is applied to a touch screen with curved regions, so that a high accidental-touch rate of the curved regions is avoided, and the touch accuracy of the touch screen is improved.

The method for controlling a touch screen provided by the embodiments of the disclosure may determine an application scene of a touch screen, and determine whether to shield an edge region with a high accidental-touch rate according to the application scene, so that large-screen, full-screen or curved screen touch can be realized under the application scene where whole-screen touch is needed, and accidental-touch prevention regions which easily have a high accidental-touch rate can be automatically shielded under the application scene where accidental touch needs to be lowered. Therefore, the accidental-touch rate of the touch screen is reduced, and the touch detection accuracy of the touch screen is improved.

As shown in FIG. 5, the embodiment provides a device for controlling a touch screen, applied to a terminal with a touch screen. The device includes:
a first determination module 110, configured to determine an application scene of the touch screen;
a second determination module 120, configured to determine an accidental-touch prevention region of the touch screen according to the application scene; and
a shielding module 130, configured to shield an operation on the accidental-touch prevention region.

In some embodiments, the first determination module 110, the second determination module 120 and the shielding module 130 may all be program modules. The program modules, when run by a processor, may determine the application scene and determine whether to shield part of edge regions.

In some embodiments, the first determination module 110, the second determination module 120 and the shielding module 130 may all be software and hardware combination modules. The software and hardware combination modules may include, but not limited to, various programmable arrays. The programmable arrays may include, but not limited to, complex programmable arrays or field programmable arrays.

In other embodiments, the first determination module 110, the second determination module 120 and the shielding module 130 may all be pure hardware modules. The pure hardware modules may include, but not limited to, application-specific integrated circuits.

In some embodiments, the first determination module 110 is configured to determine the application scene according to a display mode of the touch screen of the terminal; or/and, determine the application scene according to a type of display content of the touch screen of the terminal.

In some embodiments, the device may further include:
a collection module, configured to collect accidental-touch region data of the touch screen under the different application scenes based on usage data of a user; and
a third determination module, configured to predetermine edge parts to be shielded under different application scenes according to the accidental-touch region data and establish corresponding relations between application scenes and the corresponding accidental-touch prevention regions according to the accidental-touch region data.

In some embodiments, the second determination module 120 is configured to determine to not shield the touch screen when the application scene is a full-screen scene. The full-screen scene may be a video playing scene, a game scene or a photographing scene.

In some embodiments, the second determination module 120 is configured to determine to shield part of edge regions of the touch screen when the application scene is not the full-screen scene.

The device may further include:
a fourth determination module, configured to determine to shield at least part of edge regions of long sides or at least part of edge regions of short sides of the touch screen according to the display mode of the touch screen.
In some embodiments, the fourth determination module is configured to determine to shield at least part of the edge regions of the short sides of the touch screen when the display mode of the touch screen is a landscape mode.

In some embodiments, the fourth determination module is configured to determine to shield at least part of the edge regions of the long sides of the touch screen when the display mode of the touch screen is a portrait mode.

In some embodiments, the edge regions of the long sides may include: long side left edge regions and long side right edge regions symmetrically distributed with the long side left edge regions, The edge regions of the short sides may include: short side upper edge regions and short side lower edge regions symmetrically distributed with the short side upper edge regions. Shielding at least part of the edge regions of the long sides or at least part of the edge regions of the short sides of the touch screen may include: shielding regions other than center sub-regions of the long side left edge regions and sub-regions other than the center sub-regions of the long side right edge regions, or shielding regions other than the center sub-regions of the short side upper edge regions and sub-regions other than the center sub-regions of the short side lower edge regions.

In some embodiments, the touch screen may include a plane region and curved regions at edges of the plane region.

The second determination module 120 is configured to determine at least part of the curved regions as the accidental-touch prevention region according to the application scene.

Two examples are provided below with reference to any of the embodiments described above.

### Example 1:

The ranges of fingers touching a screen of a mobile phone may be different under different application scenes, namely accidental-touch regions may be not the same under different conditions, therefore, different optimization strategies may be adopted for specific application scenes so as to reduce accidental touch. Typically, there are following categories depending on the conditions of usage.

A first category is that: the mobile phone is vertically held in daily use.

A second category is that: the mobile phone enters into a game scene, accidental-touch regions are in a landscape mode, and regions where accidental touch may occur may be not the same when games are different and operations are different.

A third category is that: the mobile phone is in a reading scene, such as novels, cartoons and the like.

### Example 2:

Different application scenes may be determined firstly when a terminal device is used, what state a user is in, e.g., a daily use condition or other application scenes, may be determined according to present conditions of use of the terminal device by a user, and accidental-touch prevention regions may be set according to different conditions.

Data collection under each scene may be performed for a specific curved screen, accidental-touch region data of a user may be collected, and corresponding setting may be made according to related information of accidental touch, namely, accidental-touch prevention regions under the corresponding scenes are set. The accidental-touch prevention regions are regions needing to be shielded under a specific scene.

In daily use, different region shielding settings may be performed for different scenes so as to avoid accidental touch over the curved screen to the maximum extent. Different optimizations may be performed for different application scenes, accidental touch can be reduced as much as possible without degrading use experience, and making different optimizations for different scenes is optimal solutions at present.

An embodiment of the present disclosure provides a terminal. The terminal includes:
a transceiver;
a processor; and
a memory configured to store instructions executable by the processor.

The processor is configured to run the instructions to implement the above method for controlling a touch screen provided by any technical solution, for example, the method for controlling a touch screen applied to the terminal or the method for controlling a touch screen applied to a server.

The processor may implement the methods for controlling a touch screen shown in FIG. 1, FIG. 2 and/or FIG. 3 by running various executable instructions such as source codes or object codes.

An embodiment of the present disclosure provides a computer storage medium, which has executable instructions stored thereon. The executable instructions, when run by a processor, may implement the above methods for controlling a touch screen provided by any technical solution.

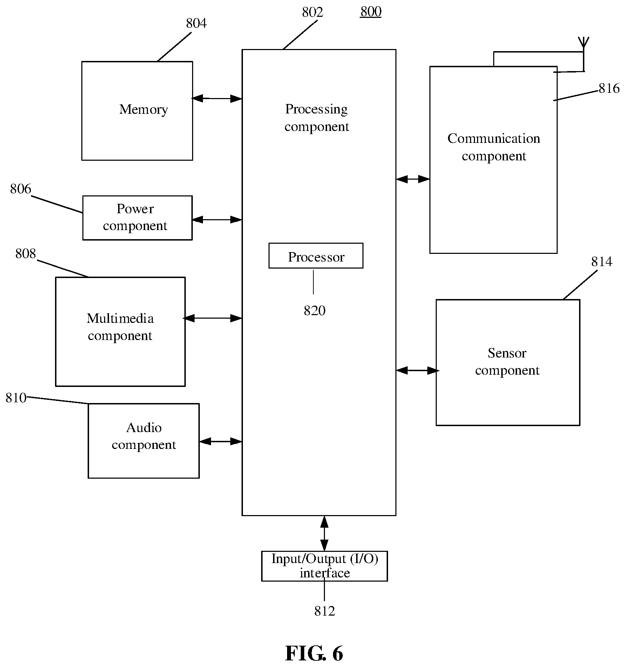

FIG. 6 is a block diagram illustrating a terminal 800 according to an exemplary embodiment not being part of the present disclosure. For example, the terminal 800 may be a mobile phone, a computer, a digital broadcast terminal, a messaging device, a gaming console, a tablet, a medical device, exercise equipment, a personal digital assistant, and the like.

Referring to FIG. 6, the terminal 800 may include one or more of the following components: a processing component 802, a memory 804, a power component 806, a multimedia component 808, an audio component 810, an Input/Output (I/O) interface 812, a sensor component 814, and a communication component 816.

The processing component 802 is typically configured to control overall operations of the terminal 800, such as operations associated with display, telephone calls, data communications, camera operations, and recording operations. The processing component 802 may include one or a plurality of processors 820 to execute instructions to complete all or part of the steps of the method described above. In addition, the processing component 802 may include one or a plurality of modules to facilitate the interaction between the processing component 802 and other components. For example, the processing component 802 may include a multimedia module to facilitate the interaction between the multimedia component 808 and the processing component 802.

The memory 804 is configured to store various types of data to support operations at the device 800. Examples of such data include instructions for any applications or methods operated on the terminal 800, contact data, phonebook data, messages, pictures, video, etc. The memory 804 may be implemented by any type of volatile or non-volatile memory devices or combinations thereof, such as a Static Random Access Memory (SRAM), an Electrically Erasable Programmable Read Only Memory (EEPROM), an Erasable Programmable Read Only Memory (EPROM), a Programmable Read Only Memory (PROM), a Read Only Memory (ROM), a magnetic memory, a flash memory, a magnetic disk or a compact disk.

The power component 806 is configured to provide power to various components of the terminal 800. The power component 806 may include a power management system, one or more power sources, and any other components associated with the generation, management and distribution of power for the terminal 800.

The multimedia component 808 may include a screen providing an output interface between the terminal 800 and a user. In some embodiments, the screen may include a liquid crystal display (LCD) and a touch panel (TP).If the screen includes the TP, the screen may be implemented as a touch screen to receive an input signal from a user. The touch panel includes one or more touch sensors to sense touch, sliding, and gestures on the touch panel. The touch sensors may not only sense a boundary of a touch or swipe action, but also detect duration and pressure related to the touch or swipe operation. In some embodiments, the multimedia component 808 includes a front camera and/or a rear camera. The front camera and/or the rear camera may receive external multimedia data when the terminal 800 is in an operation mode, such as a photographing mode or a video mode. Each front camera and each rear camera may be fixed optical lens systems or may have focal lengths and optical zoom capabilities.

The audio component 810 is configured to output and/or input audio signals. For example, the audio component 810 may include a Microphone (MIC) configured to receive an external audio signal when the terminal 800 is in an operation mode, such as a call mode, a recording mode, and a voice recognition mode. The received audio signals may be further stored in the memory 804 or sent via the communication component 816. In some embodiments, the audio component 810 may further include a speaker configured to output audio signals.

The I/O interface 812 may provide an interface between the processing component 802 and peripheral interface modules, such as a keyboard, a click wheel, or buttons. These buttons may include, but not limited to: a home button, a volume button, a start button, and a lock button.

The sensor component 814 may include one or more sensors configured to provide status assessments of various aspects of the terminal 800. For example, the sensor component 814 may detect an opened/closed state of the terminal 800 and the relative positioning of the components such as a display and a keypad of the terminal 800, and the sensor component 814 may also detect the position change of the terminal 800 or a component of the terminal 800, the presence or absence of contact between a user and the terminal 800, the orientation or acceleration/deceleration of the terminal 800, and the temperature change of the terminal 800. The sensor component 814 may include a proximity sensor configured to detect the existence of nearby objects under the situation of no physical contact. The sensor component 814 may also include an optical sensor, such as a CMOS or CCD image sensor, for use in an imaging application. In some embodiments, the sensor component 814 may further include an accelerometer sensor, a gyroscope sensor, a magnetic sensor, a pressure sensor, or a temperature sensor.

The communication component 816 is configured to facilitate a wired or wireless communication between the terminal 800 and other devices. The terminal 800 may access a wireless network based on a communication standard, such as WiFi, 2G or 3G, or combinations thereof. In one exemplary embodiment, the communication component 816 receives broadcast signals or broadcast related information from an external broadcast management system via a broadcast channel. In one exemplary embodiment, the communication component 816 further includes a Near Field Communication (NFC) module to facilitate short-range communications. For example, the NFC module can be implemented based on a Radio Frequency Identification (RFID) technology, an Infrared Data Association (IrDA) technology, an Ultra-Wideband (UWB) technology, a Bluetooth (BT) technology and other technologies.

In exemplary embodiments, the terminal 800 may be implemented with one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), controllers, micro-controllers, microprocessors, or other electronic elements, for performing the above described methods.

In exemplary embodiments, there is also provided a non-transitory computer readable storage medium including instructions, such as included in the memory 804, executable by the processor 820 in the terminal 800, for performing the above described methods. For example, the non-transitory computer-readable storage medium may be a Read Only Memory (ROM), a Random Access Memory (RAM), a Compact Disc Read Only Memory (CD-ROM), a magnetic tape, a floppy disk, an optical data storage device, and the like.

The embodiment of the present disclosure provides a non-transitory computer readable storage medium. When instructions in the storage medium are executed by a processor of a mobile terminal, the mobile terminal may execute a method for controlling a touch screen. The method includes:
determining an application scene of a touch screen;
determining an accidental-touch prevention region of the touch screen according to the application scene; and
shielding an operation on the accidental-touch prevention region.

Further, determining the application scene of the touch screen may include:
determining the application scene according to a display mode of the touch screen of the terminal; or/and
determining the application scene according to a type of display content of the touch screen of the terminal.

Further, determining the accidental-touch prevention region of the touch screen according to the application scene may include:
determining the accidental-touch prevention region of the touch screen under the application scene based on preset corresponding relations between application scenes and accidental-touch prevention regions.

Further, the method may include:
collecting accidental-touch region data of the touch screen under different application scenes based on usage data of a user; and
establishing the corresponding relations between the application scenes and the accidental-touch prevention regions according to the accidental-touch region data.

Further, the touch screen may include a plane region and curved regions on edges of the plane region.

Determining the accidental-touch prevention region of the touch screen according to the application scene may include:
determining at least part of the curved regions as the accidental-touch prevention region according to the application scene.

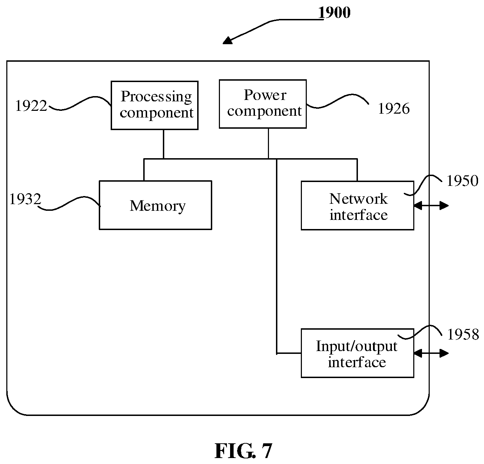

FIG. 7 is a block diagram illustrating a server 1900 according to an exemplary embodiment not being part of the present invention. For example, the server 1900 may be provided as a server. Referring to FIG. 7, the server 1900 includes a processing component 1922, further including one or more processors and memory resources represented by a memory 1932 for storing instructions capable of being executed by the processing component 1922, such as application programs. The application programs stored in the memory 1932 may include one or more modules each of which corresponds to a set of instructions. Furthermore, the processing component 1922 is configured to execute instructions to execute the above methods.

The server 1900 may further include a power component 1926 configured to execute power management of the server 1900, a wired or wireless network interface 1950 configured to connect the server 1900 to the network, and an input/output (I/O) interface 1958. The server 1900 may operate an operating system stored in the memory 1932, such as Windows ServerTM, Mac OS XTM, UnixTM, LinuxTM, FreeBSDTM or the like.

Other embodiments of the present disclosure will be apparent to those skilled in the art from consideration of the specification and practice of the disclosure herein.

It will be appreciated that the present disclosure is not limited to the exact construction that has been described above and illustrated in the accompanying drawings, and that various modifications and changes may be made without departing from the scope thereof. It is intended that the scope of the present disclosure only be limited by the appended claims.

## Claims

1. A method for controlling a touch screen, implemented by a terminal with a touch screen, the method comprising:
determining (S11) an application scene of the touch screen;
determining (S12) an accidental-touch prevention region of the touch screen according to the application scene; and
shielding (S13) an operation on the accidental-touch prevention region,
**characterized in that**,
the method further comprises:
collecting usage data generated when a user uses the terminal, and statistically analyzing and processing the usage data, to obtain accidental-touch region data of the touch screen under different application scenes;
analyzing accidental-touch prevention data through a deep learning model or a machine learning model; and
establishing corresponding relations between the different application scenes and accidental-touch prevention regions,
wherein according to the accidental-touch prevention data, touch regions with a higher accidental-touch probability than a threshold or with a maximum accidental-touch probability under the different application scenes are analyzed, and the touch regions are set as the accidental-touch prevention regions under the corresponding application scenes.

2. The method according to claim 1, wherein determining(S11) the application scene of the touch screen comprises:
determining the application scene according to a display mode of the touch screen of the terminal; or/and
determining the application scene according to a type of display content of the touch screen of the terminal.

3. The method according to claim 1 or claim 2, wherein the touch screen comprises a plane region and curved regions on edges of the plane region; and
determining(S 12) the accidental-touch prevention region of the touch screen according to the application scene comprises:
determining at least part of the curved regions as the accidental-touch prevention region according to the application scene.

4. A device for controlling a touch screen, applied to a terminal with a touch screen, the device comprising:
a first determination module (110), configured to determine an application scene of the touch screen;
a second determination module (120), configured to determine an accidental-touch prevention region of the touch screen according to the application scene; and
a shielding module (130), configured to shield an operation on the accidental-touch prevention region,
**characterized in that**,
the device further comprises:
a collection module, configured to collect usage data generated when a user uses the terminal, and statistically analyze and process the usage data, to obtain accidental-touch region data of the touch screen under different application scenes, and analyze accidental-touch prevention data through a deep learning model or a machine learning model; and
a third determination module, configured to establish corresponding relations between the different application scenes and accidental-touch prevention regions,
wherein according to the accidental-touch prevention data, touch regions with a higher accidental-touch probability than a threshold or with a maximum accidental-touch probability under the different application scenes are analyzed, and the touch regions are set as the accidental-touch prevention regions under the corresponding application scenes.

5. The device according to claim 4, wherein the first determination module (110) is configured to determine the application scene according to a display mode of the touch screen of the terminal; or/and, determine the application scene according to a type of display content of the touch screen of the terminal.

6. The device according to claim 4 or 5, wherein the touch screen comprises a plane region and curved regions on edges of the plane region; and
the second determination module(120) is configured to determine at least part of the curved regions as the accidental-touch prevention region according to the application scene.

7. A computer storage medium, having executable instructions stored thereon that, when executed by a processor, implement the method of any one of claims 1-3.

## Patentansprüche

1. Verfahren zum Steuern eines Berührungsbildschirms, das durch ein Endgerät mit einem Berührungsbildschirm implementiert wird, wobei das Verfahren umfasst:
Bestimmen (S11) einer Anwendungsszene des Berührungsbildschirms;
Bestimmen (S12) eines Bereichs zum Verhindern versehentlicher Berührung des Berührungsbildschirms entsprechend der Anwendungsszene; und
Abschirmen (S13) einer Operation im Bereich zum Verhindern versehentlicher Berührung,
**dadurch gekennzeichnet, dass**
das Verfahren weiter umfasst:
Erheben von Nutzungsdaten, die erzeugt werden, wenn der Benutzer das Endgerät nutzt, und statistisches Analysieren und Verarbeiten dieser Nutzungsdaten, um Daten über einen Bereich versehentlicher Berührung des Berührungsbildschirms in verschiedenen Anwendungsszenen zu erhalten;
Analysieren von Daten zum Verhindern versehentlicher Berührung durch ein Deep-Learning-Modell oder ein Machine-Learning-Modell; und
Aufbauen entsprechender Beziehungen zwischen den verschiedenen Anwendungsszenen und Bereichen zum Verhindern versehentlicher Berührung,
wobei entsprechend den Daten zum Verhindern versehentlicher Berührungen Berührungsbereiche mit einer höheren Wahrscheinlichkeit einer versehentlichen Berührung als einem Schwellenwert oder mit einer maximalen Wahrscheinlichkeit einer versehentlichen Berührung in den verschiedenen Anwendungsszenen analysiert werden, und die Berührungsbereiche als Bereiche zum Verhindern versehentlicher Berührung in den entsprechenden Anwendungsszenen festgelegt werden.

2. Verfahren nach Anspruch 1, wobei Bestimmen (S11) der Anwendungsszene des Berührungsbildschirms umfasst:
Bestimmen der Anwendungsszene entsprechend einem Anzeigemodus des Berührungsbildschirms des Endgeräts; oder/und
Bestimmen der Anwendungsszene gemäß einem Anzeigeinhaltstyp des Berührungsbildschirms des Endgeräts.

3. Verfahren nach Anspruch 1 oder Anspruch 2, wobei der Berührungsbildschirm einen ebenen Bereich und gekrümmte Bereiche an den Rändern des ebenen Bereichs umfasst; und
Bestimmen (S12) des Bereichs zum Verhindern versehentlicher Berührung des Berührungsbildschirms entsprechend der Anwendungsszene umfasst:
Bestimmen mindestens eines Teils der gekrümmten Bereiche als Bereich zum Verhindern versehentlicher Berührung entsprechend der Anwendungsszene.

4. Vorrichtung zum Steuern eines Berührungsbildschirms, die auf einem Endgerät mit einem Berührungsbildschirm angewendet wird, wobei die Vorrichtung umfasst:
ein erstes Bestimmungsmodul (110), das konfiguriert ist, um eine Anwendungsszene des Berührungsbildschirms zu bestimmen;
ein zweites Bestimmungsmodul (120), das konfiguriert ist, um einen Bereich zum Verhindern versehentlicher Berührung des Berührungsbildschirms entsprechend der Anwendungsszene zu bestimmen; und
ein Abschirmmodul (130), das konfiguriert ist, um eine Operation im Bereich zum Verhindern versehentlicher Berührung abzuschirmen,
**dadurch gekennzeichnet, dass**
die Vorrichtung weiter umfasst:
ein Erhebungsmodul, das konfiguriert ist, um Nutzungsdaten zu erheben, die erzeugt werden, wenn ein Benutzer das Endgerät nutzt, und die Nutzungsdaten statistisch zu analysieren und zu verarbeiten, um Daten über einen Bereich versehentlicher Berührung des Berührungsbildschirms in verschiedenen Anwendungsszenen zu erhalten und Daten zum Verhindern versehentlicher Berührung durch ein Deep-Learning-Modell oder ein Machine-Learning-Modell zu analysieren; und
ein drittes Bestimmungsmodul, das konfiguriert ist, um entsprechende Beziehungen zwischen den verschiedenen Anwendungsszenen und Bereichen zum Verhindern versehentlicher Berührung aufzubauen,
wobei entsprechend den Daten zum Verhindern versehentlicher Berührungen Berührungsbereiche mit einer höheren Wahrscheinlichkeit einer versehentlichen Berührung als einem Schwellenwert oder mit einer maximalen Wahrscheinlichkeit einer versehentlichen Berührung in den verschiedenen Anwendungsszenen analysiert werden, und die Berührungsbereiche als Bereiche zum Verhindern versehentlicher Berührung in den entsprechenden Anwendungsszenen festgelegt werden.

5. Vorrichtung nach Anspruch 4, wobei das erste Bestimmungsmodul (110) konfiguriert ist, um die Anwendungsszene entsprechend einem Anzeigemodus des Berührungsbildschirms des Endgeräts zu bestimmen; oder/und die Anwendungsszene entsprechend einem Anzeigeinhaltstyp des Berührungsbildschirms des Endgeräts zu bestimmen.

6. Vorrichtung nach Anspruch 4 oder 5, wobei der Berührungsbildschirm einen ebenen Bereich und gekrümmte Bereiche an den Rändern des ebenen Bereichs umfasst; und
das zweite Bestimmungsmodul (120) konfiguriert ist, um mindestens einen Teil der gekrümmten Bereiche als Bereich zum Verhindern versehentlicher Berührung entsprechend der Anwendungsszene zu bestimmen.

7. Computerspeichermedium, das darin gespeicherte ausführbare Anweisungen aufweist, die, wenn sie von einem Prozessor ausgeführt werden, das Verfahren nach einem der Ansprüche 1-3 implementieren.

## Revendications

1. Procédé de commande d'un écran tactile, mis en œuvre par un terminal doté d'un écran tactile, le procédé comprenant :
la détermination (S11) d'un contexte d'application de l'écran tactile ;
la détermination (S12) d'une zone de prévention des contacts accidentels sur l'écran tactile en fonction du contexte d'application ; et
la protection (S13) contre une opération sur la zone de prévention des contacts accidentels,
**caractérisé en ce que**,
le procédé comprend en outre :
la collecte de données d'utilisation générées lorsqu'un utilisateur utilise le terminal, et l'analyse statistique et le traitement des données d'utilisation, afin d'obtenir des données de la zone de prévention des contacts accidentels de l'écran tactile dans différents contextes d'application ;
l'analyse de données de prévention des contacts accidentels au moyen d'un modèle d'apprentissage profond ou d'un modèle d'apprentissage automatique ; et
l'établissement de relations de correspondance entre les différents contextes d'application et les zones de prévention des contacts accidentels,
dans lequel, selon les données de prévention des contacts accidentels, des zones tactiles présentant une probabilité de contact accidentel supérieure à un seuil ou une probabilité de contact accidentel maximale dans les différents contextes d'application sont analysées, et les zones tactiles sont définies comme les zones de prévention des contacts accidentels dans les contextes d'application correspondants.

2. Procédé selon la revendication 1, dans lequel la détermination (S11) du contexte d'application de l'écran tactile comprend :
la détermination du contexte d'application en fonction d'un mode d'affichage de l'écran tactile du terminal ; et/ou
la détermination du contexte d'application en fonction du type de contenu affiché sur l'écran tactile du terminal.

3. Procédé selon la revendication 1 ou la revendication 2, dans lequel l'écran tactile comprend une zone plane et des zones courbes sur les bords de la zone plane ; et
la détermination (S12) de la zone de prévention des contacts accidentels de l'écran tactile en fonction du contexte d'application comprend :
la détermination d'au moins une partie des zones courbes comme zone de prévention des contacts accidentels en fonction du contexte d'application.

4. Dispositif de commande d'écran tactile, appliqué à un terminal doté d'un écran tactile, le dispositif comprenant :
un premier module de détermination (110), configuré pour déterminer un contexte d'application de l'écran tactile ;
un deuxième module de détermination (120), configuré pour déterminer une zone de prévention des contacts accidentels sur l'écran tactile en fonction du contexte d'application ; et
un module de protection (130), configuré pour protéger contre une opération sur la zone de prévention des contacts accidentels,
**caractérisé en ce que**,
le dispositif comprend en outre :
un module de collecte, configuré pour collecter des données d'utilisation générées lorsqu'un utilisateur utilise le terminal, et analyser statistiquement et traiter les données d'utilisation, afin d'obtenir des données sur la zone de prévention des contacts accidentels de l'écran tactile dans différents contextes d'application, et d'analyser les données sur la zone de prévention des contacts accidentels grâce à un modèle d'apprentissage profond ou un modèle d'apprentissage automatique ;
un troisième module de détermination, configuré pour établir des relations de correspondance entre les différents contextes d'application et les zones de prévention des contacts accidentels,
dans lequel, selon les données de prévention des contacts accidentels, des zones tactiles présentant une probabilité de contact accidentel supérieure à un seuil ou une probabilité de contact accidentel maximale dans les différents contextes d'application sont analysées, et les zones tactiles sont définies comme les zones de prévention des contacts accidentels dans les contextes d'application correspondants.

5. Dispositif selon la revendication 4, dans lequel le premier module de détermination (110) est configuré pour déterminer le contexte d'application en fonction d'un mode d'affichage de l'écran tactile du terminal ; et/ou déterminer le contexte d'application en fonction du type de contenu affiché sur l'écran tactile du terminal.

6. Dispositif selon la revendication 4 ou 5, dans lequel l'écran tactile comprend une zone plane et des zones courbes sur les bords de la zone plane ; et
le deuxième module de détermination (120) est configuré pour déterminer au moins une partie des zones courbes comme zone de prévention des contacts accidentels en fonction du contexte d'application.

7. Support de stockage informatique, sur lequel sont stockées des instructions exécutables qui, lorsqu'elles sont exécutées par un processeur, mettent en œuvre le procédé selon l'une quelconque des revendications 1-3.
